# EUROPÄISCHE PATENTSCHRIFT

(11) **EP 0 836 787 B1**
(45) Veröffentlichungstag und Bekanntmachung des Hinweises auf die Patenterteilung: **14.01.2004**
(21) Anmeldenummer: 96918611.3
(22) Anmeldetag: 25.06.1996
(51) Int. Cl.: H04Q 7/22, H04Q 7/24, H04Q 11/04, H04L 29/06

(54) **VERFAHREN ZUR ÜBERTRAGUNG VON DATENPAKETEN GEMÄSS EINEM PAKETDATENDIENST IN EINEM FÜR SPRACH- UND DATENÜBERTRAGUNG VORGESEHENEN ZELLULAREN MOBILFUNKNETZ**
METHOD OF TRANSMITTING DATA PACKETS ACCORDING TO A PACKET DATA SERVICE IN A CELLULAR MOBILE RADIO NETWORK PROVIDED FOR VOICE AND DATA-TRANSMISSION
PROCEDE POUR LA TRANSMISSION DE PAQUETS DE DONNEES, SUIVANT UN SERVICE DE DONNEES PAR PAQUETS, DANS UN RESEAU RADIO-MOBILE CELLULAIRE PREVU POUR LA TRANSMISSION DE LA PAROLE ET DE DONNEES

(30) Priorität: 06.07.1995 DE 19524659
(43) Veröffentlichungstag der Anmeldung: 22.04.1998
(73) Patentinhaber: SIEMENS AKTIENGESELLSCHAFT, 80333 München (DE)
(72) Erfinder: MADEMANN, Frank, D-15344 Strausberg (DE)
(86) Internationale Anmeldenummer: PCT/DE1996/001118
(87) Internationale Veröffentlichungsnummer: WO 1997/002712

(56) Entgegenhaltungen:
- EP-A- 0 642 283
- WO-A-95/16330
- ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, Bd. 1, 23.April 1995, VERBAND DEUTSCHER ELEKTROTECHNIKER (VDE) ET AL, Seiten 36-40, XP000495534 MADEMANN F: "GENERAL PACKET RADIO SERVICE - A PACKET MODE SERVICE WITHIN THE GSM"

## Beschreibung

Die Erfindung betrifft ein Verfahren zur Übertragung von Datenpaketen gemäß einem Paketdatendienst in einem für Sprach- und Datenübertragung vorgesehenen zellularen Mobilfunknetz.

Aus der WO 95/ 16330 sind mehrere Einrichtungen und eine Mobilstation zur Übertragung von Datenpaketen bekannt, die mittels eines Aufbaus von logischen Paketdatenkanälen eine optimierte Übertragung der Datenpakete ermöglichen. Die datenpaketspezifischen Einrichtungen sind ganz oder teilweise in den Komponenten eines GSM-Mobilfunksystems verwirklicht. Unter Verwendung spezieller Paketdatenprotokolle werden die Datenpakete von und zu der Mobilstation auf den Paketdatenkanälen übertragen.

Aus der EP 0 642 283 A2 ist ein Mobilfunksystem bekannt, bei dem zur Verringerung der Kosten für den Teilnehmer bei der Übertragung von Datenpaketen in dem Mobifunksystem ein virtueller Kanal mit Hilfe eines Austausches und Abspeicherns von Parametern in einer Mobilstation und einer Feststation aufgebaut wird, der einen schnellen Aufbau eines realen Datenkommunikationskanals ermöglicht und während der Übertragungspausen der Datenpakete bestehen bleibt, um den Wiederaufbau des realen Datenkommunikationskanals zu beschleunigen.

In zellularen Mobilfunknetzen, wie beispielsweise dem GSM-Mobilfunknetz (Global System for Mobile Communication) für Sprach- und Datenübertragung, kommt es bei kurzzeitigen Datenübertragungen zu einer unverhältnismäßig hohen Signalisierungslast. In der Regel wird für die Datenübertragung zunächst ein Signalisierungsprotokoll aufgebaut, das für den Austausch von teilnehmerbezogenen bzw. netzrelevanten Informationen sorgt. Zur Übertragung der Signalisierungsinformationen wird ein eigener Kanal zur Verfügung gestellt. Im Anschluß an das Signalisierungsprotokoll wird ein Datenprotokoll für die Übertragung von Nutzdaten aufgebaut, wobei zuvor noch eine Datenbankabfrage während des belegten Kanals zusätzlich zwischengeschaltet sein kann.

Es ist Aufgabe der vorliegenden Erfindung, ein Verfahren der eingangs genannten Art anzugeben, durch das im Mobilfunknetz die Signalisierungslast bei der Übertragung von Datenpaketen verringert und die Kanäle effizienter genutzt werden können.

Diese Aufgabe wird gemäß der Erfindung durch die Merkmale des Patentanspruchs 1 gelöst.

Zur Übertragung mindestens eines Datenpakets von bzw. zu einer mobilen Teilnehmerstation wird im Funkübertragungssystem des Mobilfunknetzes jeweils ein Kanal reserviert und mit einem Übertragungskanal, der zu einem gesonderten Dienstenetzknoten führt, zu einem durchgehenden Datenkanal verknüpft.

Über den Datenkanal werden Datenpakete und Signalisierungsinformationen gemeinsam in einem einzigen Datenprotokoll zwischen der mobilen Teilnehmerstation und dem Dienstenetzknoten übertragen. Somit erfolgt eine Übertragung von Signalisierungsinformationen und Datenpaketen in lediglich einem Protokoll, nämlich dem Datenprotokoll. Da das Datenprotokoll komplexer als ein Signalisierungsprotokoll ist, eignet es sich besonders zur zusätzlichen Übertragung von Signalisierungsinformationen. Ein Signalisierungsprotokoll allein hätte nicht den Datendurchsatz zur zusätzlichen Übertragung von Datenpaketen. Bei einer Anforderung des Paketdatendienstes kann durch Verwendung des einen Datenprotokolls ein unbelegter Funkkanal im Funkübertragungssystem des Mobilfunknetzes schnell belegt und wieder freigegeben werden, was eine effizientere Nutzung der Funkkanäle bewirkt. Es brauchen keine eigenen Funkkanäle für die im Rahmen des Paketdatendienstes zu übertragenden Datenpakete und Signalisierungsinformationen reserviert zu werden, da die üblichen, zur Sprach- und Datenübertragung vorgesehenen Funkkanäle bei Bedarf zur Paketübertragung zugewiesen werden. Durch Verwendung eines einzigen Datenprotokolls zur gemeinsamen Übertragung der Datenpakete und Signalisierungsinformationen verringert sich die Signalisierungslast und die Funkkanalbelegungsdauer im Mobilfunknetz gegenüber der Lösung mit zwei voneinander getrennten Protokollen für Signalisierung und für Daten.

Gemäß einer Weiterbildung der Erfindung werden im Datenprotokoll teilnehmerbezogene und/oder netzrelevante Signalisierungsinformationen übertragen. Die Signalisierungsinformationen können aus Authentifizierungs-, Identifizierungs-, Lokalisierungs-, Verschlüsselungs- oder Datendiensteinformationen bestehen.

Von Vorteil ist es, wenn die Signalisierungsinformationen im ersten Teil des Datenprotokolls und die Datenpakete im Anschluß an die Signalisierungsinformationen übertragen werden.

Von Vorteil ist es auch, wenn der Dienstenetzknoten in einer Mobilvermittlungsstelle oder zusätzlich zu einer Mobilvermittlungsstelle des Vermittlungssystems oder im Funkübertragungssystem des Mobilfunknetzes angeordnet ist.

Von Vorteil ist es, wenn durch den Dienstenetzknoten die Zugangsberechtigung eines Mobilfunkteilnehmers zum Mobilfunknetz bereits während oder erst nach Empfang der Datenpakete überprüft wird.

Gemäß einer anderen Weiterbildung der Erfindung werden die Datenpakete und die Signalisierungsinformationen im Datenprotokoll entweder von der mobilen Teilnehmerstation zum Dienstenetzknoten oder in der Gegenrichtung von dem Dienstenetzknoten zur mobilen Teilnehmerstation ausgesendet.

Die Erfindung wird anhand eines in Figuren dargestellten Ausführungsbeispiels näher erläutert. Im einzelnen zeigen
- Figur 1: die Einrichtungen eines Mobilfunknetzes zur Übertragung von Datenpaketen gemäß einem Paketdatendienst und
- Figur 2: den Signalflußplan zwischen den Einrichtungen bei der Datenpaketübertragung.

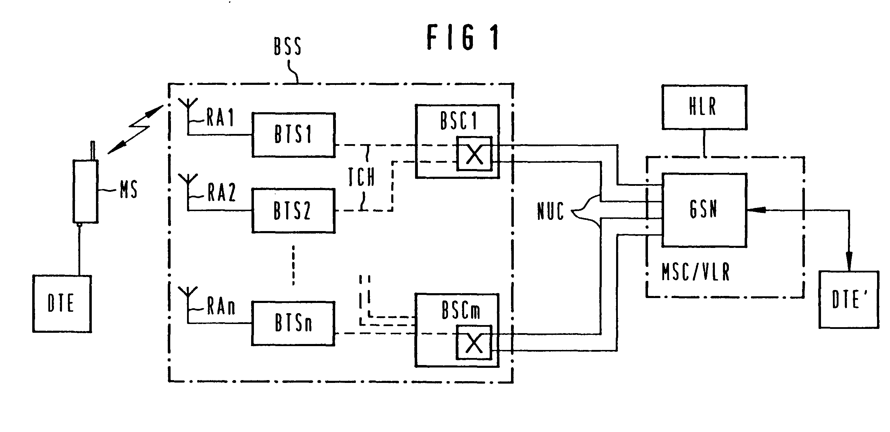

Figur 1 zeigt Einrichtungen eines zellularen digitalen Mobilfunknetzes nach dem GSM-Standard zur Sprach- und Datenübertragung. Durch eine einheitliche Luftschnittstelle zur drahtlosen Verbindung von mobilen Teilnehmerstationen MS mit einem Funkübertragungssystem BSS können Mobilfunkteilnehmer im Mobilfunknetz abgehend und ankommend telefonieren oder Daten senden bzw. empfangen. Mit dem Funkübertragungssystem BSS ist ein Vermittlungssystem mit üblicherweise mehreren Mobilvermittlungsstellen MSC und zugehörigen Besucherregistern VLR verbunden. Das Besucherregister VLR speichert als dezentrale Teilnehmerdatenbasis vorübergehend die Teilnehmerdaten der Mobilfunkteilnehmer, die sich in einem von der jeweiligen Mobilvermittlungsstelle MSC betreuten Aufenthaltsgebiet (location area) aktuell aufhalten. Die Teilnehmerdaten aller im Mobilfunknetz registrierten Mobilfunkteilnehmer werden in mindestens einer zentralen Teilnehmerdatenbasis - dem Heimatregister HLR - hinterlegt. Die Mobilvermittlungsstellen MSC, die Besucherregister VLR und das bzw. die Heimatregister HLR sind dabei Bestandteil des Vermittlungssystems im Mobilfunknetz.

Das Funkübertragungssystem BSS weist Basis-Sende/Empfangsstationen BTS1, BTS2...BTSn mit zugehörigen Antennen RA1, RA2...RAn zum Senden bzw. Empfangen der Sprach- oder Datensignale auf. Die Signalübertragung zwischen der mobilen Teilnehmerstation MS und einer auf Grund des Aufenthaltsorts des Mobilfunkteilnehmers zuständigen Basis-Sende/Empfangsstation erfolgt drahlos über die Luftschnittstelle. Mehrere Basis-Sende/Empfangsstationen BTS1... sind jeweils mit einer Basisstationssteuerung BSC1...BSCm - im vorliegenden Beispiel über feste Leitungen - verbunden. Die Basis-Sende/Empfangsstationen BTS1 und BTS2 sind an die Basisstationssteuerung BSC1 angeschlossen, während die Basis-Sende/Empfangsstation BTSn mit der Basistationssteuerung BSCm verbunden ist. Die Basisstationssteuerungen BSC1... des Funkübertragungssystems BSS sind ihrerseits über drahtgebundene Leitungen, Richtfunkstrecken, Glasfaserkabel oder andere Übertragungsmittel mit dem Vermittlungssystem bzw. den darin angeordneten Mobilvermittlungsstellen MSC verbunden.

Für die Nutzung eines Paketdatendienstes (GPRS, General Packet Radio Service) werden ein oder mehrere Datenpakete zwischen der mobilen Teilnehmerstation MS und einem gesonderten Dienstenetzknoten GSN im Mobilfunknetz in beiden Übertragungsrichtungen ausgetauscht. Zur Eingabe oder Ausgabe der Datenpakete ist an die mobile Teilnehmerstation MS eine Dateneingabe- bzw. Datenausgabeeinheit DTE angeschaltet. Ebenso ist an den gesonderten Dienstenetzknoten GSN eine Dateneingabe- bzw. Datenausgabeeinheit DTE' angeschaltet, wobei zusätzliche Einrichtungen (Protokoll Router) zur Durchschaltung der Datenpakete vom gesonderten Dienstenetzknoten GSN zur Dateneingabe- bzw. Datenausgabeeinheit DTE' und zur Steuerung eines entspechenden Datenprotokolls zwischengeschaltet werden können. Zur Übertragung der Datenpakete gemäß dem Paketdatendienst wird im Funkübertragungssystem BSS jeweils ein Funkkanal TCH reserviert. Dabei wird zunächst eine Kanalanfrage von der mobilen Teilnehmerstation MS an die zuständige Basis-Sende/Empfangsstation - beispielsweise die Basis-Sende/Empfangsstation BTS1 - und von dort an die Basisstationssteuerung, z.B. BSC1, gerichtet. Die Basisstationssteuerung BSC1 weist daraufhin der mobilen Teilnehmerstation MS den Funkkanal TCH zu und verknüpft den Funkkanal TCH mit einem Übertragungskanal NUC, der im Beispiel auf eine der verbindungsleitungen von der Basisstationssteuerung BSC1 zum gesonderten Dienstenetzknoten GSN führt. Für den Fall, daß der Dienstenetzknoten im Funkübertragungssystem BSS liegt, entfällt die Verbindungsleitung und der Übertragungskanal zum Dienstenetzknoten wird mit dem Funkkanal innerhalb des Funkübertragungssystems BSS verbunden.

Auf diese Weise entsteht ein von der mobilen Teilnehmerstation MS bis zum Dienstenetzknoten GSN durchgehender Datenkanal, über den die Datenpakete mit beispielsweise einer Datenrate von 9600 bit/s übertragen werden können. Gemäß der Erfindung werden auch die Signalisierungsinformationen zusammen mit den Datenpaketen in einem Datenprotokoll über den durchgehenden Datenkanal zwischen der mobilen Teilnehmerstation MS und dem gesonderten Dienstenetzknoten GSN übertragen. Durch die Verwendung lediglich eines Übertragungsprotokolls zum Austausch von teilnehmerbezogenen und/oder netzrelevanten Signalisierungsinformationen und von Datenpaketen verringert sich zum einen die Signalisierungslast und zum anderen die Funkkanalbelegungsdauer im zellularen Mobilfunknetz. Vorzugsweise werden im Datenprotokoll die Datenpakete unmittelbar im Anschluß an die Signalisierungsinformationen ausgesendet bzw. empfangen. Die übermittelten Datenpakete werden im Bedarfsfall zwischengespeichert, bis die weitere Übertragung gestattet bzw. eine Verarbeitung der Datenpakete - beispielsweise in Form von Verschlüsselung bzw. Entschlüsselung - erfolgt ist.

Der gesonderte Dienstenetzknoten GSN zur Bearbeitung des Paketdatendienstes im zellularen Mobilfunknetz ist im vorliegenden Beispiel Bestandteil der Mobilvermittlungsstelle MSC. Eine Anordnung des Dienstenetzknotens im Funkübertragungssystem BSS oder zusätzlich zu den Mobilvermittlungsstellen MSC des Vermittlungssystems ist als Alternative möglich. Die Übertragungskanäle NUC zwischen den Basisstationssteuerungen BSC1... und dem Dienstenetzknoten GSN ermöglichen eine schnelle Zuschaltung verschiedener Funkkanäle TCH, die jeweils für die Dauer der Übertragung der Datenpakete und der Signalisierungsinformationen für einen Mobilfunkteilnehmer reserviert sind. Der Funkkanal TCH ist daher nur für die Zeitdauer eines Datenpaket- und Signalisierungsinformationstransfers belegt. Zur Nutzung des Paketdatendienstes brauchen Funkkanäle nicht eigens reserviert zu werden, da die für Sprach- und Datensignale vorgesehenen üblichen Übertragungskanäle und die bestehenden Teilnehmerdatenbasen HLR, VLR verwendet werden. Darüber hinaus nutzt man zur Datenübertragung für den Paketdatendienst die im Mobilfunknetz bereits existierenden Adressierungsverfahren - mit der internationalen Mobilfunkteilnehmeridentifikationsnummer (IMSI) oder einer anderen Mobilfunkteilnehmernummer (z.B. MSISDN) und der temporären Mobilfunkteilnehmeridentifikationsnummer (TMSI) - sowie die auf die Mobilität der Teilnehmer gerichteten Steuerungs- und Verwaltungsfunktionen (mobility management).

Ein weiterer Vorteil der gemeinsamen Übertragung von Datenpaketen und Signalisierungsinformationen im Datenprotokoll besteht darin, daß die Überprüfung der Zugangsberechtigung des Mobilfunkteilnehmers zum Mobilfunknetz nach der Übertragung der Datenpakete und der Signalisierungsinformationen von der mobilen Teilnehmerstation MS zum Dienstenetzknoten GSN durchgeführt wird, so daß der Funkkanal nicht während administrativer Abläufe belegt wird. Durch Übermittlung der internationalen oder der temporären Mobilfunkteilnehmeridentifikationsnummer in den Signalisierungsinformationen kann der Dienstenetzknoten GSN einen Bezug zu den in den Teilnehmerdatenbasen gespeicherten Teilnehmerdaten herstellen. Somit ist keine kanal- oder paketbezogene Signalisierung zwischen dem Funkübertragungssystem BSS und der jeweiligen Mobilvermittlungsstelle MSC erforderlich.

Für den Fall, daß der gesonderte Dienstenetzknoten zur Bearbeitung des Paketdatendienstes im Vermittlungssystem des Mobilfunknetzes liegt, ist das Funkübertragungssystem BSS vom Paketdatendienst kaum betroffen, was eine Reduzierung der Kosten bei der Implementierung des Dienstes im Mobilfunknetz bewirkt. Die Signalisierungsinformationen, die im Datenprotokoll vorzugsweise vor den Datenpaketen übertragen werden, umfassen Authentifizierungsinformationen, Identifizierungsinformationen, Lokalisierungsinformationen, Datendienstinformationen oder Informationen zur Verschlüsselung der Datenpakete. Somit kann es sich bei den Signalisierungsinformationen um teilnehmerbezogene oder um netzrelevante Informationen handeln. Als Datenprotokoll zwischen der mobilen Teilnehmerstation MS und dem gesonderten Dienstenetzknoten GSN wird ein verbindungsloses Netzprotokoll - beispielsweise das ISO CLNP (Connection Less Network Protocol) - verwendet, das die Verringerung der Verkehrslast im Mobilfunknetz unterstützt.

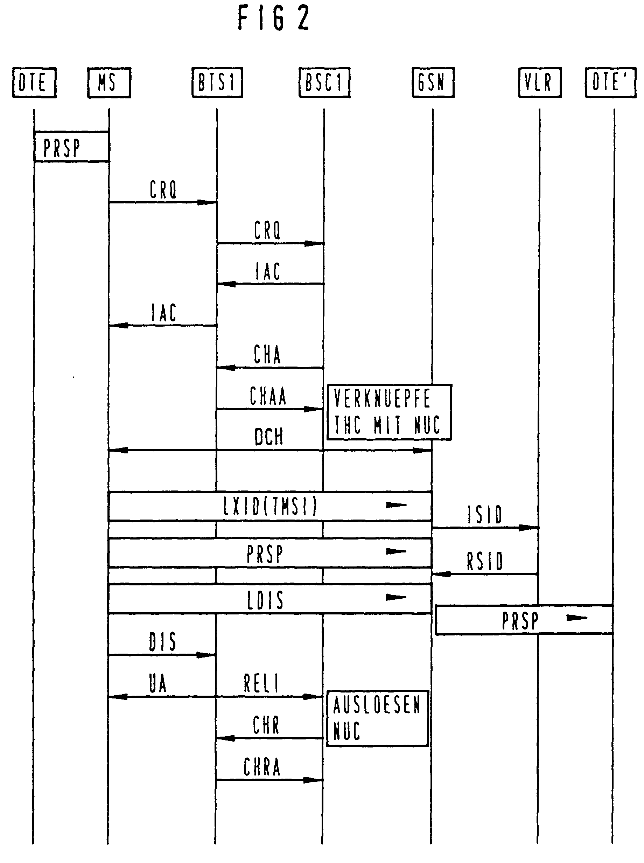

Figur 2 zeigt den Signalfluß zwischen den in Figur 1 dargestellten Einrichtungen bei der Übertragung der Datenpakete gemäß dem Paketdatendienst im zellularen Mobilfunknetz. Der Signalfluß gilt für den Fall, daß Datenpakete im Rahmen des Paketdatendienstes von der Dateneingabeeinheit DTE zur mobilen Teilnehmerstation MS, von ihr zum gesonderten Dienstenetzknoten GSN und von ihm zur Datenausgabeeinheit DTE', die in einem anderen Kommunikationsnetz, beispielsweise einem leitungsgebundenen Festnetz, angeordet ist, ausgesendet werden. Die mobile Teilnehmerstation MS empfängt von der Dateneingabeeinheit DTE mindestens ein Datenpaket PRSP und leitet den Aufbau eines Funkkanals zur Basisstationssteuerung BSC1 dadurch ein, daß sie eine Kanalanfrage CRQ auf einem wahlfreien Zugriffskanal an die zuständige Basis-Sende/Empfangsstation BTS1 sendet. Die mit einer Kodierung für den Paketdatendienst versehene Kanalanfrage CRQ wird von der Basis-Sende/Empfangsstation BTS1 an die Basisstationssteuerung BSC1 weitergeleitet. Die Basisstationssteuerung BSC1 weist daraufhin anhand einer Zuordnungsnachricht IAC, die zur Basis-Sende/Empfangsstation BTS1 und von dort zur mobilen Teilnehmerstation MS ausgesendet wird, einen Funkkanal zu.

Im Funkübertragungssystem wird zwischen der Basisstationssteuerung BSC1 und der Basis-Sende/Empfangsstation BTS1 anhand der Nachrichten CHA und CHAA ein Kanal belegt, der mit dem Funkkanal verbunden wird. Von der Basisstationssteuerung BSC1 wird der Funkkanal TCH an den Übertragungskanal NUC, der zum Dienstenetzknoten GSN führt, geschaltet. Auf diese Weise entsteht aus der Verknüpfung des Funkkanals TCH mit dem Übertragungskanal NUC ein durchgehender Datenkanal DCH zwischen der mobilen Teilnehmerstation MS und dem Dienstenetzknoten GSN. Nach erfolgter Synchronisation des Datenkanals DCH zwischen mobiler Teilnehmerstation MS und Dienstenetzknoten GSN werden Signalisierungsinformationen - wie beispielsweise die temporäre Mobilfunkteilnehmeridentifikationsnummer TMSI - in einem ersten Protokollelement LXID des Datenprotokolls und die Datenpakete PRSP im Anschluß daran übertragen. In einem anschließend an die Datenpakete PRSP folgenden Protokollelement LDIS des Datenprotokolls wird der Transfer der Datenpakete und der Signalisierungsinformationen ausgelöst.

Nach Empfang der temporären Mobilfunkteilnehmeridentifikationsnummer TMSI im Protokollelement LXID fordert der Dienstenetzknoten GSN mit der Nachricht ISID vom Besucherregister VLR die internationale Mobilfunkteilnehmeridentifikationsnummer (IMSI), eine Verschlüsselungsinformation (cipher key), sowie die Zugangsberechtigung des Teilnehmers zu Netz an. Die angeforderten Informationen werden vom Besucherregister VLR bereitgestellt und mit der Nachricht RSID rückgesendet. Die Nachricht RSID mit den angeforderten Informationen wird vom Dienstenetzknoten GSN beispielsweise nach Eintreffen der Datenpakete PRSP empfangen. Die von dem Dienstenetzknoten GSN empfangenen Datenpakete PRSP werden anschließend zur Datenausgabeeinheit DTE' gesendet, wobei im Festnetz ein eigenes Datenprotokoll für die Datenübertragung verwendet wird. Zur Sicherung der zu übertragenden Datenpakete wird im Mobilfunknetz das Datensicherungsprotokoll RLP (Radio Link Protocol) und im Festnetz das Datensicherungsprotokoll HDLC (High Level Data Link Control) verwendet.

Von der mobilen Teilnehmerstation MS wird eine Nachricht DIS zur Basis-Sende/Empfangsstation BTS1 gesendet, mit der die Freigabe des aufgebauten Datenkanals zwischen der mobilen Teilnehmerstation MS und dem Dienstnetzknoten GSN veranlaßt werden soll. Von der Basis-Sende/Empfangsstation BTS1 wird daraufhin zur mobilen Teilnehmerstation MT eine Bestätigungsnachricht UA und zur Basisstationssteuerung BSC1 eine Nachricht RELI zum Abbau des Funkkanals im Funkübertragungssystem ausgesendet. Von der Basisstationssteuerung BSC1 wird der Übertragungskanal NUC zum Dienstenetzknoten GSN freigegeben und eine Nachricht CHR zur Basis-Sende/Empfangsstation BTS1 gesendet, die das Auslösen des Kanals zwischen der Basis-Sende/Empfangsstation BTS1 und der Basisstationssteuerung BSC1 fordert. Als Antwort erhält die Basisstationssteuerung BSC1 von der Basis-Sende/Empfangsstation BTS1 eine Bestätigungsnachricht CHRA, daß die Auslösenachricht empfangen wurde.

Die Merkmale des erfindungsgemäßen Verfahrens sind ebenso bei einem Transfer der Datenpakete in der umgekehrten Übertragungsrichtung, d.h. von der Dateneingabeeinheit DTE' im Festnetz über den Dienstenetzknoten GSN zur mobilen Teilnehmerstation MS und zur Datenausgabeeinheit DTE im Mobilfunknetz anwendbar. In diesem Fall empfängt die mobile Teilnehmerstation MS im Datenprotokoll die Datenpakete und die Signalisierungsinformationen vom gesonderten Dienstenetzknoten GSN. Nach dem Eintreffen mindestens eines Datenpakets im Dienstenetzknoten GSN wird das Besucherregister VLR abgefragt und danach ein Funkruf (paging) ausgelöst. Der anschließende Signalisierungsablauf und die Datenpaketübertragung erfolgen in gleicher Weise wie bei dem in Figur 2 dargestellten Fall, daß Datenpakete von der mobilen Teilnehmerstation MS gesendet werden. Zusätzlich zu den in Figur 1 dargestellten Einrichtungen im Mobilfunknetz können gesonderte Durchschalteeinrichtungen (Routing Datenbasis, Gateway Router) mit jeweils einer Schnittstelle zum Heimatregister HLR und einer Schnittstelle zum Protokoll Router im Falle der Datenübertragung vom Dienstenetzknoten GSN zur mobilen Teilnehmerstation MS angeordnet sein.

## Patentansprüche

1. Verfahren zur Übertragung von Datenpaketen (PRSP) gemäß einem Paketdatendienst in einem für Sprach- und Datenübertragung vorgesehenen zellularen Mobilfunknetz, bei dem im Funkübertragungssystem (BSS) des Mobilfunknetzes jeweils ein Kanal (TCH) zur Übertragung mindestens eines Datenpakets (PRSP) von bzw. zu einer mobilen Teilnehmerstation (MS) aufgebaut wird,
**dadurch gekennzeichnet,**
- **daß** der Kanal (TCH) mit einem Übertragungskanal (NUC), der zu einem gesonderten Dienstenetzknoten (GSN) führt, zu einem Datenkanal verknüpft wird, und
- **daß** über den Datenkanal die Datenpakete (PRSP) und Signalisierungsinformationen (z.B. TMSI) in einem Datenprotokoll zwischen der mobilen Teilnehmerstation (MS) und dem gesonderten Dienstenetzknoten (GSN) gemeinsam übertragen werden.

2. Verfahren nach Anspruch 1,
**dadurch gekennzeichnet,**
**daß** im Datenprotokoll teilnehmerbezogene und/oder netzrelevante Signalisierungsinformationen übertragen werden.

3. Verfahren nach Anspruch 1 oder 2,
**dadurch gekennzeichnet,**
**daß** im Datenprotokoll Authentifizierungs-, Identifizierungs-, Lokalisierungs-, Verschlüsselungs- oder Datendiensteinformationen übertragen werden.

4. Verfahren nach einem der vorhergehenden Ansprüche,
**dadurch gekennzeichnet,**
**daß** im Datenprotokoll zuerst die Signalisierungsinformationen (z.B. TMSI) und anschließend die Datenpakete (PRSP) übertragen werden.

5. Verfahren nach einem der vorhergehenden Ansprüche,
**dadurch gekennzeichnet,**
**daß** der gesonderte Dienstenetzknoten (GSN) in einer Mobilvermittlungsstelle (MSC) oder zusätzlich zu einer Mobilvermittlungsstelle (MSC) eines Vermittlungssystems im Mobilfunknetz vorgesehen ist.

6. Verfahren nach einem der Ansprüche 1 bis 4,
**dadurch gekennzeichnet,**
**daß** der gesonderte Dienstenetzknoten (GSN) im Funkübertragungssystem (BSS) des Mobilfunknetzes liegt.

7. Verfahren nach einem der vorhergehenden Ansprüche,
**dadurch gekennzeichnet,**
**daß** durch den gesonderten Dienstenetzknoten (GSN) die Zugangsberechtigung eines Mobilfunkteilnehmers während oder nach Empfang der Datenpakete (PRSP) überprüft wird.

8. Verfahren nach einem der vorhergehenden Ansprüche,
**dadurch gekennzeichnet,**
**daß** über den durchgehenden Datenkanal die Datenpakete (PRSP) und Signalisierungsinformationen (z.B. TMSI) im Datenprotokoll von der mobilen Teilnehmerstation (MS) zum gesonderten Dienstenetzknoten (GSN) oder in der Gegenrichtung von dem gesonderten Dienstenetzknoten (GSN) zur mobilen Teilnehmerstation (MS) gesendet werden.

## Claims

1. A method for transmitting data packets (PRSP) according to a packet data service in a cellular mobile radio network which is provided for voice and data transmission and in which in each case one channel (TCH) for transmitting at least one data packet (PRSP) from or to a mobile subscriber station (MS) is set up in the radio transmission system (BSS) of the mobile radio network, **characterized in that**
- the channel (TCH) is linked to a transmission channel (NUC), which leads to a separate service network node (GSN), to form a data channel, and
- the data packets (PRSP) and signalling information (e.g. TMSI) are transmitted jointly via the data channel in one data protocol between the mobile subscriber station (MS) and the separate service network node (GSN).

2. Method according to Claim 1, **characterized in that** subscriber-specific and/or network-related signalling information is transmitted in the data protocol.

3. Method according to Claim 1 or 2, **characterized in that** authentification, identification, localization, encryption or data service information is transmitted in the data protocol.

4. Method according to one of the preceding claims, **characterized in that** firstly the signalling information (e.g. TMSI) and then the data packets (PRSP) are transmitted in the data protocol.

5. Method according to one of the preceding claims, **characterized in that** the separate service network node (GSN) is provided in a mobile switching centre (MSC) or in addition to a mobile switching centre (MSC) of a switching system in the mobile radio network.

6. Method according to one of Claims 1 to 4, **characterized in that** the separate service network node (GSN) is located in the radio transmission system (BSS) of the mobile radio network.

7. Method according to one of the preceding claims, **characterized in that** the separate service network node (GSN) checks the access authorization of a mobile radio subscriber during or after reception of the data packets (PRSP).

8. Method according to one of the preceding claims, **characterized in that** the data packets (PRSP) and signalling information (e.g. TMSI) are transmitted in the data protocol from the mobile subscriber station (MS) to the separate service network node (GSN) or in the opposite direction from the separate service network node (GSN) to the mobile subscriber station (MS) via the continuous data channel.

## Revendications

1. Procédé pour la transmission de paquets de données (PRSP) selon un service de données par paquets dans un réseau de radiocommunication mobile cellulaire prévu pour la transmission de paroles et de données, dans lequel on établit dans le système de transmission radio (BSS) du réseau de radiocommunication mobile à chaque fois un canal (TCH) pour la transmission d'au moins un paquet de données (PRSP) de ou vers une station d'abonné mobile (MS),
**caractérisé par le fait que**
- on combine le canal (TCH) à un canal de transmission (NUC), qui conduit à un noeud de services particulier (GSN), pour former un canal de données, et
- par l'intermédiaire du canal de données, on transmet ensemble les paquets de données (PRSP) et des informations de signalisation (par exemple TMSI) dans un protocole de données entre la station d'abonné mobile (MS) et le noeud de services particulier (GSN).

2. Procédé selon la revendication 1,
**caractérisé par le fait que**, dans le protocole de données, on transmet des informations de signalisation se rapportant à l'abonné et/ou déterminantes pour le réseau.

3. Procédé selon la revendication 1 ou 2,
**caractérisé par le fait que**, dans le protocole de données, on transmet des informations d'authentification, d'identification, de localisation, de cryptage ou de service de données.

4. Procédé selon l'une des revendications précédentes,
**caractérisé par le fait que**, dans le protocole de données, on transmet d'abord les informations de signalisation (par exemple TMSI) et ensuite les paquets de données (PRSP).

5. Procédé selon l'une des revendications précédentes,
**caractérisé par le fait que** le noeud de services particulier (GSN) est prévu dans un centre de commutation de service mobile (MSC) ou en plus d'un centre de commutation de service mobile (MSC) d'un système de commutation dans le réseau de radiocommunication mobile.

6. Procédé selon l'une des revendications 1 à 4,
**caractérisé par le fait que** le noeud de services particulier (GSN) se trouve dans le système de transmission radio (BSS) du réseau de radiocommunication mobile.

7. Procédé selon l'une des revendications précédentes,
**caractérisé par le fait que** le noeud de services particulier (GSN) vérifie l'autorisation d'accès d'un abonné de radiocommunication mobile pendant ou après la réception des paquets de données (PRSP).

8. Procédé selon l'une des revendications précédentes,
**caractérisé par le fait que**, par l'intermédiaire du canal de données continu, les paquets de données (PRSP) et des informations de signalisation (par exemple TMSI) sont envoyés dans le protocole de données de la station d'abonné mobile (MS) au noeud de services particulier (GSN) ou dans le sens inverse du noeud de services particulier (GSN) à la station d'abonné mobile (MS).
